# FASCICULE DE BREVET EUROPEEN

(11) **EP 3 830 934 B1**
(45) Date de publication et mention de la délivrance du brevet: **01.01.2025**
(21) Numéro de dépôt: 19762189.9
(22) Date de dépôt: 25.07.2019
(51) Int. Cl.: H02K 5/20, H02K 11/33, H02K 5/22, H01G 4/28, H01G 2/10, H01G 4/224, H01G 4/40

(54) **MACHINE ÉLECTRIQUE POLYPHASÉE À ÉLECTRONIQUE DE PUISSANCE INTEGRÉE ET À CIRCUIT DE REFROIDISSEMENT INTEGRE**
MEHRPHASIGE ELEKTRISCHE MASCHINE MIT INTEGRIERTER LEISTUNGSELEKTRONIK UND INTEGRIERTEM KÜHLKREISLAUF
POLYPHASE ELECTRICAL MACHINE WITH INTEGRATED POWER ELECTRONICS AND AN INTEGRATED COOLANT CIRCUIT

(30) Priorité: 31.07.2018 FR 1857144
(43) Date de publication de la demande: 09.06.2021
(73) Titulaire: SAFRAN, 75015 Paris (FR)
(72) Inventeur: SABER, Christelle, 77550 MOISSY-CRAMAYEL (FR); GAUTIER, Cyrille, 77550 MOISSY-CRAMAYEL (FR); ALI, Marwan, 77550 MOISSY-CRAMAYEL (FR)
(74) Mandataire: Cabinet Beau de Loménie
(86) Numéro de dépôt international: PCT/FR2019/051843
(87) Numéro de publication internationale: WO 2020/025884

(56) Documents cités:
- EP-A1- 3 148 303
- WO-A1-2014/044428
- WO-A2-2013/114043
- US-A1- 2016 276 895

## Description

### Arrière-plan de l'invention

L'invention concerne le domaine de l'électrification/hybridation de la propulsion principalement des avions et autres giravions mais également les applications non-propulsives comme la génération de réseau de bord et elle se rapporte plus particulièrement à une nouvelle architecture d'intégration de l'électronique de puissance au plus près d'une machine électrique polyphasée pour véhicule aérien ou terrestre.

L'électrification des aéronefs et plus particulièrement celle de leur propulsion conduit à l'augmentation des niveaux de puissances électriques embarqués (passage des centaines de kW vers le MW) qui impactent directement l'ensemble de la chaîne de conversion dédiée à la génération de la puissance électrique. Ceci concerne autant les convertisseurs électromécaniques (machines électriques) que les convertisseurs électriques (électronique de puissance). Ainsi, une préoccupation majeure actuelle consiste à augmenter la densité volumique de puissance afin d'améliorer la compacité de l'ensemble du système {machine électrique + électronique de puissance + commande associée} tout en visant des performances améliorées (augmenter l'efficacité énergétique, assurer la tenue mécanique, gérer les aspects thermiques, la disponibilité, la fiabilité, etc.).

Des solutions connues sous l'appellation de « Integrated Modular Motor Drive » ou bien de « Smart Motor » proposent d'intégrer l'électronique de puissance au plus près de la machine électrique soit de façon interne au carter de la machine soit de façon externe, en surface ou en extrémité de ce carter (par exemple WO2013/114043 et US2016/276895).

Ces solutions souffrent toutefois encore de nombreux inconvénients. L'intégration surfacique radiale externe au carter où l'électronique de puissance est non-répartie présente le défaut d'une faible compacité, de pertes dans les dispositifs semi-conducteurs non répartis et d'une faible compatibilité avec une électronique de puissance modulaire. L'intégration surfacique axiale externe au carter nécessite un espace disponible à une des deux extrémités du carter pas toujours présent dans les applications aéronautiques. L'intégration interne au carter compatible avec une électronique de puissance modulaire présente cependant des contraintes thermiques liées à la tenue en température et d'intégration liées au volume des condensateurs du bus DC.

### Objet et résumé de l'invention

La présente invention propose donc une nouvelle architecture intégrée d'entraînement à vitesse variable de machine électrique polyphasée qualifiée d'hybride, c'est-à-dire dont l'électronique de puissance est à la fois interne et externe au carter, palliant les inconvénients précités.

Ce but est atteint avec une machine électrique polyphasée à n phases comportant un carter définissant un axe longitudinal, un stator et un rotor comportant un arbre mécanique d'entrainement, la machine électrique étant équipée d'une électronique de puissance et d'un circuit de refroidissement, ladite électronique de puissance étant formée de n modules électroniques de puissance régulièrement répartis sur une circonférence interne d'une extension longitudinale dudit carter dont une circonférence externe est recouverte par un unique condensateur de découplage de bus DC annulaire électriquement connecté aux dits n modules électroniques de puissance, machine caractérisée en ce que ledit circuit de refroidissement comporte une pluralité de tubes en forme de U avec une partie d'aller tubulaire s'étendant sur toute une longueur du carter et y compris ladite extension longitudinale de carter et une partie de retour tubulaire de plus petite longueur, s'étendant sur une longueur de carter à l'exclusion de ladite extension longitudinale de carter.

Le recours à un unique condensateur de découplage annulaire et à la disposition modulaire de l'électronique de puissance dans une extension du carter augmente notablement la densité volumique de puissance tout en résolvant le problème posé par le volume important de ce type de composants.

Avantageusement, un fluide de refroidissement est introduit à une première extrémité desdits tubes en forme de U par un orifice d'entrée radial disposé à une extrémité libre de ladite extension longitudinal de carter et extrait à une seconde extrémité desdits tubes en forme de U, par un orifice de sortie radial.

Avec un tel agencement assurant un refroidissement de l'électronique de puissance avant celui de la machine électrique, l'extraction de la chaleur est notablement améliorée de même que la tenue en température de la machine.

De préférence, lesdits orifices radiaux d'entrée débouchent radialement dans une rainure annulaire de répartition de fluide alimentant en fluide de refroidissement ladite pluralité de tubes en forme de U.

Avantageusement, lesdits tubes en forme de U dudit circuit de refroidissement sont disposés en nombre plus élevé au niveau desdits modules électroniques de puissance.

De préférence, ladite partie de retour tubulaire est disposée à l'extérieur de ladite partie d'aller tubulaire et débouche sensiblement au niveau d'une l'extrémité du stator dans une rainure annulaire de répartition de fluide de laquelle émerge ledit orifice de sortie radial pour l'évacuation du fluide de refroidissement préalablement introduit dans ladite partie d'aller tubulaire par un orifice d'entrée radial débouchant radialement dans une rainure annulaire de répartition de fluide. Dans cette configuration, la machine électrique comporte en outre une chemise externe entourant la machine électrique au niveau de ladite partie de retour tubulaire.

Selon un mode de réalisation particulier, la machine électrique peut comporter en outre n blocs de filtrage disposés alternativement avec lesdits modules électroniques de puissance sur ladite circonférence interne de ladite extension longitudinale.

De préférence, la machine électrique comporte en outre un couvercle à chacune de ses deux extrémités, un premier couvercle, le plus proche desdits modules électroniques de puissance, étant configuré pour recevoir sur une face interne une unité de commande desdits modules électroniques de puissance et un second couvercle étant percé en son centre pour permettre le passage dudit arbre mécanique d'entrainement.

Avantageusement, ledit unique condensateur de découplage annulaire est un condensateur film de type PTFE HT présentant deux entrées électriques et n sorties électriques identiques disposées en face desdits n modules électroniques de puissance.

De préférence, ladite machine électrique polyphasée comporte n modules électroniques de puissance comportant chacun deux éléments de commutation et si nécessaire n blocs de filtrage comportant chacun une inductance de filtrage.

### Brève description des dessins

L'invention sera mieux comprise à la lecture de la description faite ci-après à titre indicatif mais non limitatif en référence aux figures suivantes sur lesquelles :
- la figure 1 est une vue en perspective d'un premier exemple de réalisation non revendiqué d'une machine électrique polyphasée à électronique de puissance intégrée,
- la figure 2 est une coupe longitudinale de la machine électrique polyphasée de la figure 1,
- la figure 3 est une vue en perspective d'un second exemple de réalisation d'une machine électrique polyphasée à électronique de puissance intégrée conforme à l'invention,
- la figure 4 est une coupe longitudinale de la machine électrique polyphasée de la figure 3, et
- la figure 5 est un schéma électrique illustrant une machine électrique polyphasée et son électronique de puissance associée.

### Description détaillée de modes de réalisation de l'invention

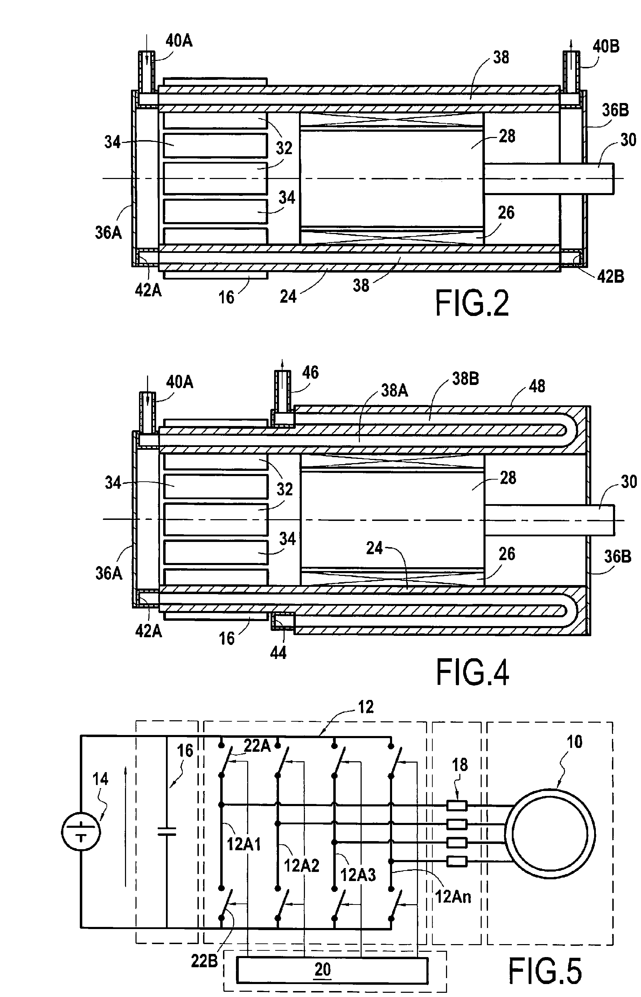

La figure 5 est un schéma de principe de commande d'une machine électrique polyphasée 10 par un onduleur 12, par exemple à deux niveaux, alimenté depuis une source d'alimentation continue 14. Pour la simplicité du dessin, l'exemple donné à titre illustratif et non limitatif montre un onduleur à 4 bras qui alimente une machine à 4 phases. Toutefois, par machine polyphasée il convient d'entendre une machine électrique ayant un nombre de phases au stator supérieur ou égal à 3. Comme il est connu, un condensateur de découplage 16 disposé entre la source d'alimentation et l'entrée de l'onduleur permet de lisser une éventuelle variation de tension de la source d'alimentation (notamment lorsque celle-ci comporte un redresseur) et des inductances de filtrage 18 disposées entre la sortie de l'onduleur et la machine électrique permettent de limiter dans la machine électrique les interférences électromagnétiques résultant des commutations de l'onduleur. On notera toutefois que ces inductances de filtrage peuvent être omises lorsque la compatibilité électromagnétique n'est pas une caractéristique recherchée et que la longueur des câbles d'alimentation reliant l'onduleur au stator de la machine électrique est relativement faible.

Dans une architecture classique en pont à deux niveaux, l'onduleur 12 comporte autant de bras de puissance 12A1, 12A2, ..., 12An que de phases 1, 2,..., n de la machine électrique et chaque bras de puissance comporte deux éléments de commutation (par exemple 22A, 22B). Le point milieu d'une paire d'éléments de commutation d'un même bras de puissance est relié à un enroulement de phase du stator de la machine électrique. Les éléments de commutation (thyristor, IGBT, MOSFET ou analogues) sont pilotés de façon connue par une unité de commande 20 mettant en oeuvre des procédés de modulation de largeur d'impulsion (MLI) sinusoïdal, vectoriel ou autres.

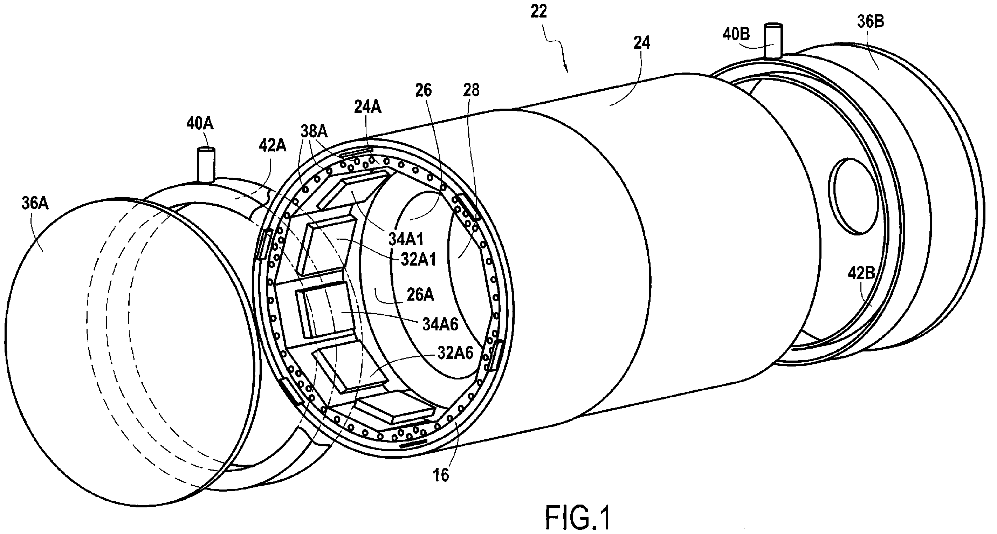

Les figures 1 et 2 montrent en vue extérieure et en coupe longitudinale un premier exemple non revendiqué de structure essentiellement cylindrique d'une telle machine électrique polyphasée 22 comportant un carter tubulaire 24, un stator annulaire 26 et un rotor cylindrique 28. Le carter 24 entoure le stator 26 qui lui-même entoure le rotor 28 traversé par un arbre mécanique d'entrainement 30 définissant un axe de rotation longitudinal de la machine électrique.

Conformément à cet exemple non revendiqué, le carter 24 présente une extension longitudinale 24A à une extrémité 26A des deux extrémités du stator 26 pour entourer également les différents composants permettant la commande de la machine électrique, à savoir les modules électroniques de puissance 32 intégrant les éléments de commutation et les blocs de filtrage 34 intégrant les inductances de filtrage. Modules et blocs sont disposés alternativement à la circonférence interne du carter 24 au niveau de cette extension 24A. Dans l'exemple illustré qui ne saurait bien entendu qu'être donné à titre illustratif et non limitatif, la machine électrique polyphasée est une machine à six phases et comporte donc six modules électroniques de puissance 32A1- 32A6 comportant chacun deux éléments de commutation 22A, 22B et si nécessaire six blocs de filtrage 34A1-34A6 comportant chacun une inductance de filtrage 18.

L'intégration de ces différents composants électroniques dans l'extension du carter permet une minimisation des longueurs des câbles électriques reliant l'onduleur à la machine électrique, ce qui permet de limiter l'effet corona et le vieillissement des roulements comme des isolants de la machine électrique (amélioration de la durée de vie).

En outre, en recourant à de telles solutions polyphasées modulaires on augmente aisément la puissance électrique embarquée (augmentation des densités volumiques). Cette modularité permet en outre d'accroitre la tolérance aux défaillances et la disponibilité de la machine électrique.

Le condensateur de découplage de bus DC 16 est réalisé sous forme annulaire et disposé à la circonférence externe du carter 24 au niveau de l'extension 24A sur une largeur correspondant donc sensiblement à celles des modules et blocs précités disposés alternativement à sa circonférence interne et auxquels il est connecté électriquement. Il présente deux entrées électriques, avantageusement placées du côté de la rainure 42B, et n sorties électriques identiques, avantageusement placées du côté de la rainure 42A, et disposées en face des entrées électriques des n modules de puissance, de sorte à minimiser ces distances entrées/sorties et ainsi réduire les inductances parasites des éléments (ou cellules) de commutation pour éviter les surtensions et améliorer la compatibilité électromagnétique du système. Le recours à un tel condensateur annulaire à diamètre interne élevé en assurant une répartition surfacique homogène autour du carter permet une réduction de poids et de volume et limite le recours à des dissipateurs thermiques car sa disposition lui permet en outre de profiter du refroidissement dont bénéficie les composants électroniques, comme il sera décrit plus avant. Un condensateur annulaire approprié à la présente invention est par exemple un condensateur film PTFE HT (PolyTétraFluoroEthylène haute température).

La machine électrique polyphasée 22 est fermée à chacune de ses deux extrémités par un flasque ou couvercle 36A, 36B, le premier couvercle 36A, le plus proche des modules électroniques de puissance, étant destiné à recevoir sur sa face interne à la machine électrique polyphasée l'unité de commande 20 (non représentée) de ces modules. Le second couvercle 36B est percé en son centre pour le passage de l'arbre mécanique d'entrainement 30.

Dans cet exemple non revendiqué, le carter 24 comporte en outre un circuit de refroidissement formé d'une pluralité de tubes rectilignes longitudinaux 38 repartis régulièrement autour du carter et le traversant de part en part, et assurant le refroidissement à la fois de la machine électrique polyphasée et de son électronique de puissance et de commande. Plus précisément, pour favoriser l'extraction de chaleur des éléments de commutation, l'entrée d'un fluide de refroidissement (avantageusement de l'eau ou de l'huile) est effectuée par un orifice d'entrée radial 40A débouchant dans une rainure annulaire de répartition de fluide 42A disposée au niveau du premier couvercle 36A à l'extrémité libre de l'extension de carter, et sa sortie par un orifice de sortie radial 40B débouchant dans une rainure annulaire de répartition de fluide 42B disposée au niveau du second couvercle 36B. Ainsi, les modules électroniques de puissance 32 intégrant les éléments de commutation, les blocs de filtrage 34 intégrant les inductances de filtrage et le condensateur de découplage 16 seront en contact du fluide de refroidissement en premier, la machine électrique n'étant elle-même en contact avec ce fluide de refroidissement qu'ensuite. On notera toutefois que, comme illustré, le nombre de tubes rectilignes longitudinaux du circuit de refroidissement peut être plus élevé au niveau des modules de puissance (cinq en l'espèce) qu'au niveau des inductances de filtrage (seulement trois).

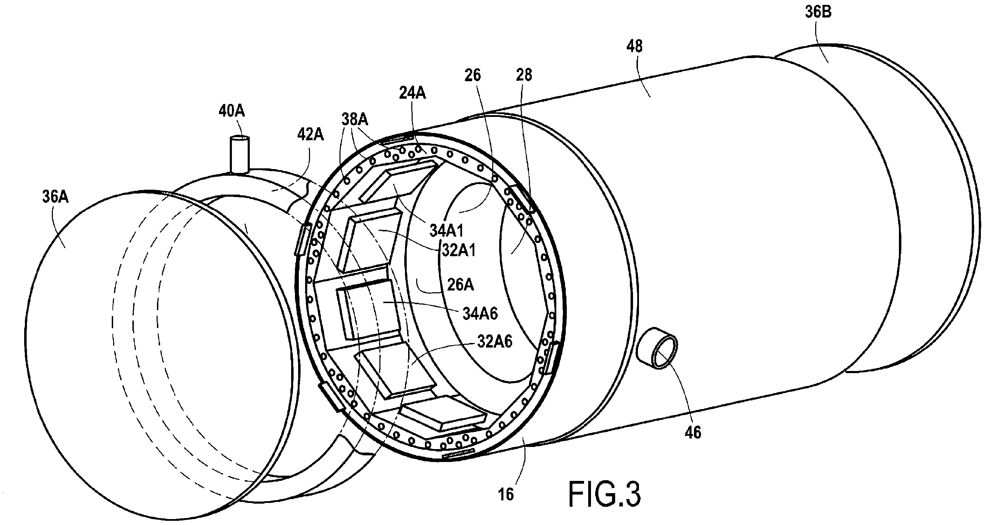

Un second exemple structurel d'une machine électrique polyphasée à six phases, seul exemple structurel conforme à l'invention, est illustré aux figures 3 et 4. On retrouve, comme dans l'exemple précédent, le carter 24 entourant le stator 26 qui lui-même entoure le rotor 28 traversé par l'arbre mécanique d'entrainement 30. Le carter est ici aussi prolongé à une extrémité par une extension longitudinale 24A destinée à recevoir d'une part extérieurement le condensateur annulaire de découplage de bus DC 16 présentant également deux entrées électriques et n sorties électriques identiques disposées en face des n modules de puissance et d'autre part intérieurement et en alternance les modules électroniques de puissance 32A1-32A6 intégrant les éléments de commutation 22A, 22B et les blocs de filtrage 34A1-34A6 intégrant les inductances de filtrage.

Ce second mode de réalisation se distingue du premier par son circuit de refroidissement qui n'est plus uniquement constitué de simples tubes rectilignes traversant le carter longitudinalement de part en part mais d'une pluralité de tubes en forme de U avec une partie d'aller tubulaire s'étendant, comme les tubes rectilignes longitudinaux 38, sur toute la longueur du carter (donc y compris l'extension de carter) 38A et une partie de retour tubulaire de plus petite longueur 38B car s'étendant sur la seule longueur de la machine électrique (stator, rotor et arbre d'entraînement) et donc à l'exclusion de l'extension de carter 24A. On notera que ce mode de réalisation du circuit de refroidissement, comme le précédent, ne sauraient être considérés comme limitatifs et qu'une répartition du circuit de refroidissement, par exemple en serpentin autour du stator, pourrait aussi être envisagée.

La partie d'aller tubulaire s'étend comme précédemment depuis l'orifice d'entrée radial 40A débouchant dans la rainure annulaire de répartition de fluide 42A disposée au niveau du premier couvercle 36A mais contrairement au mode de réalisation précédent, elle ne débouche plus au niveau du second couvercle 36B mais se retourne à cette extrémité pour former la partie de retour tubulaire, disposée à l'extérieur de la première, qui débouche sensiblement au niveau de l'extrémité 26A du stator dans une rainure annulaire de répartition de fluide 44 de laquelle émerge un orifice de sortie radial 46 pour l'évacuation du fluide de refroidissement.

Cette seconde configuration du circuit de refroidissement présente l'avantage de réduire le gradient de température entre l'entrée et la sortie de la machine électrique tout en gardant le contact premier avec les composants électroniques et le condensateur de découplage. Elle implique toutefois de couronner le carter par une chemise externe 48 entourant la machine électrique au niveau de la partie de retour tubulaire du circuit de refroidissement.

L'invention trouve plus particulièrement application dans les machines électriques modulaires intégrées dans le domaine aéronautique comme:
▪ les convertisseurs pour applications propulsives de type VTOL (pour Vertical Take Off & Landing) où chaque hélice est associée à un convertisseur ou de type ePPH (pour Electrical Power Pack Helicopter) où une hybridation des turbines est prévue pour assurer un redémarrage rapide, et
▪ les convertisseurs pour applications non-propulsives permettant une génération électrique à fréquence fixe ou une électrification des fonctions annexes d'un turbopropulseur ou turboréacteur.

## Revendications

1. Machine électrique polyphasée à n phases, n≥3, comportant un carter (24) définissant un axe longitudinal, un stator (26) et un rotor (28) comportant un arbre mécanique d'entraînement (30), la machine électrique étant équipée d'une électronique de puissance (32) et d'un circuit de refroidissement, ladite électronique de puissance étant formée de n modules électroniques de puissance (32) régulièrement répartis sur une circonférence interne d'une extension longitudinale (24A) dudit carter dont une circonférence externe est recouverte par un unique condensateur de découplage de bus DC annulaire (16) électriquement connecté aux dits n modules électroniques de puissance, machine **caractérisée en ce que** ledit circuit de refroidissement comporte une pluralité de tubes en forme de U avec une partie d'aller tubulaire (38A) s'étendant sur toute une longueur du carter et y compris ladite extension longitudinale de carter et une partie de retour tubulaire (38B) de plus petite longueur, s'étendant sur une longueur de carter à l'exclusion de ladite extension longitudinale de carter.

2. Machine électrique selon la revendication 1, **caractérisée en ce qu'**un fluide de refroidissement est introduit à une première extrémité desdits tubes en forme de U par un orifice d'entrée radial (40A) disposé à une extrémité libre de ladite extension longitudinale de carter et extrait à une seconde extrémité desdits tubes en forme de U, par un orifice de sortie radial (46).

3. Machine électrique selon la revendication 2, **caractérisée en ce que** ledit orifice radial d'entrée débouche radialement dans une rainure annulaire de répartition de fluide (42A) alimentant en fluide de refroidissement ladite pluralité de tubes en forme de U.

4. Machine électrique selon la revendication 2 ou la revendication 3, **caractérisée en ce que** lesdits tubes en forme de U dudit circuit de refroidissement sont disposés en nombre plus élevé au niveau desdits modules électroniques de puissance.

5. Machine électrique selon la revendication 2, **caractérisée en ce que** ladite partie de retour tubulaire est disposée à l'extérieur de ladite partie d'aller tubulaire et débouche sensiblement au niveau d'une l'extrémité (26A) du stator dans une rainure annulaire de répartition de fluide (44) de laquelle émerge ledit orifice de sortie radial (46) pour l'évacuation du fluide de refroidissement préalablement introduit dans ladite partie d'aller tubulaire par ledit orifice d'entrée radial (40A) débouchant radialement dans une rainure annulaire de répartition de fluide (42A).

6. Machine électrique selon la revendication 5, **caractérisée en ce qu'**elle comporte en outre une chemise externe (48) entourant la machine électrique au niveau de ladite partie de retour tubulaire.

7. Machine électrique selon la revendication 1, **caractérisée en ce qu'**elle comporte en outre n blocs de filtrage (34) disposés alternativement avec lesdits n modules électroniques de puissance sur ladite circonférence interne de ladite extension longitudinale.

8. Machine électrique selon l'une quelconque des revendications 1 à 7, **caractérisée en ce qu'**elle comporte en outre un couvercle (36A, 36B) à chacune de ses deux extrémités, un premier couvercle (36A), le plus proche desdits modules électroniques de puissance, étant configuré pour recevoir sur une face interne une unité de commande (20) desdits modules électroniques de puissance et un second couvercle (36B) étant percé en son centre pour permettre le passage dudit arbre mécanique d'entrainement.

9. Machine électrique selon l'une quelconque des revendications 1 à 8, **caractérisée en ce que** ledit unique condensateur de découplage annulaire est un condensateur film de type PTFE HT présentant deux entrées électriques et n sorties électriques identiques disposées en face desdits n modules électroniques de puissance.

10. Machine électrique selon l'une quelconque des revendications 1 à 9, **caractérisée en ce que** ladite machine électrique polyphasée comporte n modules électroniques de puissance (32A1-32A6) comportant chacun deux éléments de commutation (22A, 22B) et si nécessaire n blocs de filtrage (34A1-34A6) comportant chacun une inductance de filtrage (18).

## Patentansprüche

1. Mehrphasige elektrische Maschine mit n Phasen, n≥3, die ein Gehäuse (24), das eine Längsachse definiert, einen Stator (26) und einen Rotor (28) beinhaltet, der eine mechanische Antriebswelle (30) beinhaltet, wobei die elektrische Maschine mit einer Leistungselektronik (32) und einem Kühlkreislauf ausgestattet ist, wobei die Leistungselektronik aus n elektronischen Leistungsmodulen (32) gebildet ist, die regelmäßig über einen Innenumfang einer Längserstreckung (24A) des Gehäuses verteilt sind, wobei ein Außenumfang durch einen einzelnen ringförmigen DC-Bus-Entkopplungskondensator (16) abgedeckt ist, der elektrisch mit den n elektronischen Leistungsmodulen verbunden ist, wobei die Maschine **dadurch gekennzeichnet ist, dass** der Kühlkreislauf mehrere Rohre in U-Form mit einem rohrförmigen Vorlaufabschnitt (38A), der sich über eine gesamte Länge des Gehäuses erstreckt, und umfassend die Längserstreckung des Gehäuses, und einem rohrförmigen Rücklaufabschnitt (38B) von kürzerer Länge, der sich über eine Länge des Gehäuses mit Ausnahme der Längserstreckung des Gehäuses erstreckt, beinhaltet.

2. Elektrische Maschine nach Anspruch 1, **dadurch gekennzeichnet, dass** ein Kühlfluid an einem ersten Ende der Rohre in U-Form durch eine radiale Einlassöffnung (40A) eingeführt wird, die an einem freien Ende der Längserstreckung des Gehäuses angeordnet ist, und an einem zweiten Ende der Rohre in U-Form durch eine radiale Auslassöffnung (46) entnommen wird.

3. Elektrische Maschine nach Anspruch 2, **dadurch gekennzeichnet, dass** die radiale Einlassöffnung radial in eine ringförmige Fluidverteilungsnut (42A) mündet, die den mehreren Rohren in U-Form Kühlfluid zuführt.

4. Elektrische Maschine nach Anspruch 2 oder Anspruch 3, **dadurch gekennzeichnet, dass** die Rohre in U-Form des Kühlkreislaufs in größerer Zahl auf der Höhe der elektronischen Leistungsmodule angeordnet sind.

5. Elektrische Maschine nach Anspruch 2, **dadurch gekennzeichnet, dass** der rohrförmige Rücklaufabschnitt außerhalb des rohrförmigen Vorlaufabschnittes angeordnet ist und im Wesentlichen auf der Höhe eines Endes (26A) des Stators in eine ringförmige Fluidverteilungsnut (44) mündet, aus der die radiale Auslassöffnung (46) für die Ableitung des Kühlfluids austritt, das zuvor in den rohrförmigen Vorlaufabschnitt durch die radiale Einlassöffnung (40A) eingeführt wurde, die radial in eine ringförmige Fluidverteilungsnut (42A) mündet.

6. Elektrische Maschine nach Anspruch 5, **dadurch gekennzeichnet, dass** sie ferner einen Außenmantel (48) beinhaltet, der die elektrische Maschine auf der Höhe des rohrförmigen Rücklaufabschnittes umgibt.

7. Elektrische Maschine nach Anspruch 1, **dadurch gekennzeichnet, dass** sie ferner n Filterblöcke (34) beinhaltet, die abwechselnd mit den n elektronischen Leistungsmodulen auf dem Innenumfang der Längserstreckung angeordnet sind.

8. Elektrische Maschine nach einem der Ansprüche 1 bis 7, **dadurch gekennzeichnet, dass** sie ferner eine Abdeckung (36A, 36B) an jedem ihrer zwei Enden beinhaltet, wobei eine erste Abdeckung (36A), die den elektronischen Leistungsmodulen am nächsten ist, dazu ausgestaltet ist, auf einer Innenseite eine Steuereinheit (20) der elektronischen Leistungsmodule aufzunehmen, und eine zweite Abdeckung (36B) in ihrer Mitte durchbohrt ist, um den Durchgang der mechanischen Antriebswelle zu ermöglichen.

9. Elektrische Maschine nach einem der Ansprüche 1 bis 8, **dadurch gekennzeichnet, dass** der einzelne ringförmige Entkopplungskondensator ein Folienkondensator vom Typ PTFE HT mit zwei elektrischen Eingängen und n identischen elektrischen Ausgängen ist, die gegenüber den n elektronischen Leistungsmodulen angeordnet sind.

10. Elektrische Maschine nach einem der Ansprüche 1 bis 9, **dadurch gekennzeichnet, dass** die mehrphasige elektrische Maschine n elektronische Leistungsmodule (32A1-32A6) beinhaltet, die jeweils zwei Schaltelemente (22A, 22B) und gegebenenfalls n Filterblöcke (34A1-34A6) beinhalten, die jeweils einen Filterinduktor (18) beinhalten.

## Claims

1. A Polyphase electrical machine with n phases, n≥3, including a casing (24) defining a longitudinal axis, a stator (26) and a rotor (28) including a mechanical drive shaft (30), the electrical machine being equipped with a power electronics (32) and a coolant circuit, said power electronics being formed of n power electronic modules (32) evenly distributed over an inner circumference of a longitudinal extension (24A) of said casing whose outer circumference is covered with a single annular DC bus decoupling capacitor (16) electrically connected to said n power electronic modules, machine **characterized in that** said coolant circuit includes a plurality of U-shaped tubes with a tubular outgoing part (38A) extending over an entire length of the casing and including said longitudinal casing extension and a shorter tubular return part (38B), extending over a casing length excluding said longitudinal casing extension.

2. The electrical machine according to claim 1, **characterized in that** a coolant is introduced at a first end of said U-shaped tubes through a radial inlet orifice (40A) disposed at a free end of said longitudinal casing extension and extracted at a second end of said U-shaped tubes, through a radial outlet orifice (46).

3. The electrical machine according to claim 2, **characterized in that** said radial inlet orifice opens radially into an annular fluid distribution groove (42A) supplying said plurality of U-shaped tubes with coolant.

4. The electrical machine according to claim 2 or 3, **characterized in that** said U-shaped tubes of said coolant circuit are disposed in a higher number at said power electronic modules.

5. The electrical machine according to claim 2, **characterized in that** said tubular return part is disposed outside said tubular outgoing part and opens substantially at one end (26A) of the stator into an annular fluid distribution groove (44) from which said radial outlet orifice (46) emerges for the discharge of the coolant previously introduced into said tubular outgoing part through said radial inlet orifice (40A) opening radially into an annular fluid distribution groove (42A).

6. The electrical machine according to claim 5, **characterized in that** it further includes an outer jacket (48) surrounding the electrical machine at said tubular return part.

7. The electrical machine according to claim 1, **characterized in that** it further includes n filter blocks (34) disposed alternately with said n power electronic modules on said inner circumference of said longitudinal extension.

8. The electrical machine according to any one of claims 1 to 7, **characterized in that** it further includes a cover (36A, 36B) at each of its two ends, a first cover (36A), closest to said power electronic modules, being configured to receive on an inner face a control unit (20) of said power electronic modules and a second cover (36B) being pierced in its center to allow the passage of said mechanical drive shaft.

9. The electrical machine according to any one of claims 1 to 8, **characterized in that** said single annular decoupling capacitor is a HT PTFE type film capacitor having two electrical inlets and n identical electrical outlets disposed opposite said n power electronic modules.

10. The electrical machine according to any one of claims 1 to 9, **characterized in that** said polyphase electrical machine includes n power electronic modules (32A1-32A6) each including two switching elements (22A, 22B) and if necessary n filter blocks (34A1 -34A6) each including a filter inductor (18).
